# EUROPÄISCHE PATENTSCHRIFT

(11) **EP 0 940 898 B1**
(45) Veröffentlichungstag und Bekanntmachung des Hinweises auf die Patenterteilung: **17.12.2003**
(21) Anmeldenummer: 98104014.0
(22) Anmeldetag: 06.03.1998
(51) Int. Cl.: H02B 7/08, H02G 9/10

(54) **Anordnung eines Kabelanschlusskastens in einem Senkelektranten**
Cable connection box in a distribution station apt to be lowered underground
Coffre de connexion de câble dans un poste de distribution apte à être abaissé dans le sol

(43) Veröffentlichungstag der Anmeldung: 08.09.1999
(73) Patentinhaber: Moser, Herbert, 78120 Furtwangen (DE)
(72) Erfinder: Moser, Herbert, 78120 Furtwangen (DE)
(74) Vertreter: Patentanwälte Westphal, Mussgnug & Partner

(56) Entgegenhaltungen:
- DE-B- 1 044 921
- DE-U- 9 217 542
- DE-U- 29 612 083
- DE-U- 29 620 779
- FR-A- 2 703 847

## Beschreibung

Die Erfindung betrifft einen Senkelektranten nach dem Oberbegriff des Anspruchs 1.

In der Deutschen Gebrauchsmusteranmeldung DE 296 12 083 U ist bereits eine Anordnung dieser Art beschrieben, welche dazu dient, relativ starke und damit weniger flexible Erdkabel an einen in den Erdboden versenkten sogenannten Senkelektranten heranzuführen und durch eine Anzahl von Klemmen an das flexible Anschlußkabel des Senkelektranten anzuschließen. Dabei muß die Kabeleinführung für das Erdkabel zum Schutz gegen eindringendes Wasser mit Gießharz vergossen werden, was verhältnismäßig aufwendig ist. Es ist auch nicht ohne weiteres möglich, nachträglich Änderungen oder Wartungsarbeiten an der Anordnung vorzunehmen.

Durch die Erfindung soll daher ein Senkelektrant so verbessert werden, daß er bereits durch seinen Aufbau ohne Vergießen mit Gießharz wasserdicht ist und eine hohe Anzahl von Erdkabelanschlüssen sowie nachträgliche Änderungen an diesen Anschlüssen ermöglicht wird.

Diese Aufgabe wird bei einer Anordnung der eingangs genannten Art erfindungsgemäß durch die kennzeichnenden Merkmale des Anspruchs 1 gelöst.

Durch den in das Betongehäuse eingegossenen Isolierstoffkasten ist eine verhältnismäßig einfache allseitige Abdichtung mit Ausnahme der Erdkabeleinführung möglich, die zusätzlich geeignet abgedichtet werden muß. Dieses Eingießen des Isolierstoffkastens in das Betongehäuse ergibt auch einen hervorragenden mechanischen Schutz gegen Erddruck oder Oberflächendruck von außen. Durch die Öffnung des Isolierkastens gegen das Innere des Betongehäuses des Senkelektranten liegt der im Isolierkasten angeordnete Klemmraum für Erdkabel und Anschlußkabel in der klimatisierten Zone des Innenraums, so daß praktisch kein Schwitzwasser im Klemmraum entsteht. Da der Isolierkasten nicht mehr mit Gießharz vergossen werden muß, kann der Senkelektrant jederzeit nachgerüstet werden, wobei eine hohe Anzahl von Erdkabelanschlüssen bis zu einem Klemmquerschnitt von etwa 240 mm² möglich ist. Durch Abnahme des den Klemmraum nach außen verschließenden, abgedichteten Deckels sind die Klemmen für Erdkabel und Anschlußkabel von außen zugänglich zu machen.

Die Unteransprüche betreffen vorteilhafte Ausgestaltungen der Erfindung.

Durch die Anordnung der zur Kabeleinführung herangeführten Erdkabel in einer äußeren Nische des Betongehäuses und Festlegung derselben durch Bügelschellen oder dergl. gemäß Anspruch 2 ist eine ausgezeichnete Zugentlastung der Erdkabel erreicht.

Die Ansprüche 3 und 4 betreffen bevorzugte Ausgestaltungen der Erdkabeleinführung in abgedichteter Form.

Die Merkmale des Anspruchs 5 dienen einer besonders zweckmäßigen Überleitung des Anschlußkabels vom Klemmraum im Isolierstoffkasten ins Innere des Betongehäuses des Senkelektranten. Die Ansprüche 6 und 7 befassen sich mit einer besonders zweckmäßigen Anordnung und Abdichtung des Deckels des Isolierstoffkastens, durch dessen Abnahme ein einfacher Zugang zum Klemmraum von außen her geschaffen wird. Durch Abnahme des Vorsicherungskastens gemäß Anspruch 5 vom Isolierstoffkasten kann auch vom Inneren des Senkelektranten her ein einfacher Zugang zu den Kabelanschlüssen erreicht werden.

Anhand der Figuren wird ein bevorzugtes Ausführungsbeispiel der Erfindung näher erläutert. Es zeigt:

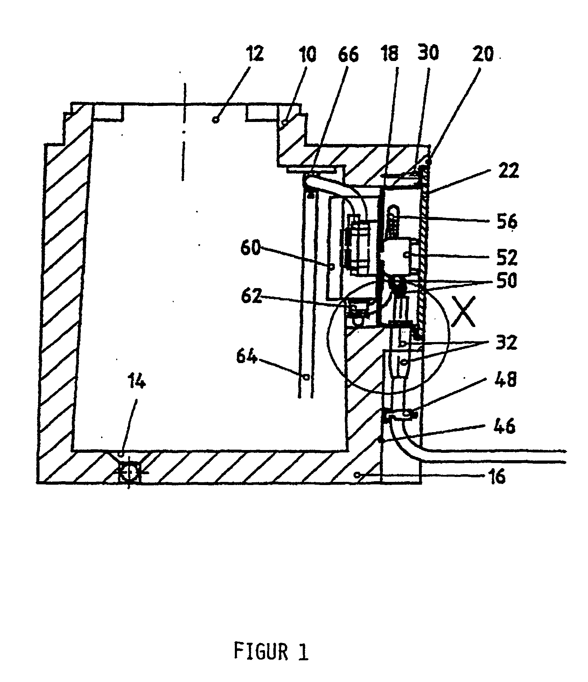

- Figur 1: einen Vertikalschnitt durch das Betongehäuse eines Senkelektranten mit eingegossenem Isolierstoffkasten,
- Figur 2: eine Seitenansicht der in Fig.1 dargestellten Anordnung von der Seite des Deckels des Isolierstoffgehäuses bei abgenommenen Deckel,
- Figur 3: eine Vergrößerung des in Fig.1 mit X bezeichneten Bereichs, und
- Figur 4: eine vergrößerte Teilansicht aus Fig.2 mit weiterführendem Anschlußkabel.

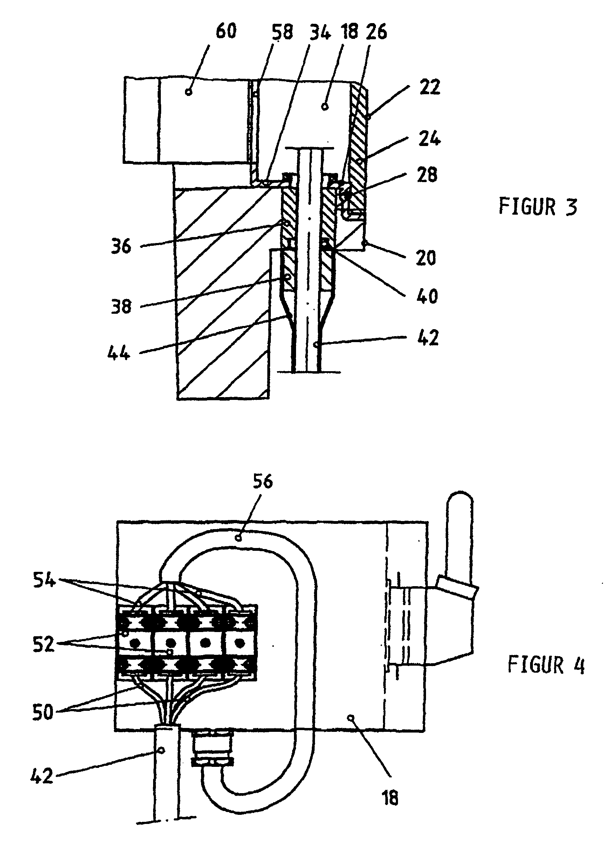

Das Betongehäuse 10 des Senkelektranten weist oben eine durch einen nicht gezeigten ausfahrbaren Deckel verschließbare Öffnung 12 und unten eine Wasserableitöffnung 14 auf. In eine Seitenwand 16 des Betongehäuses 10 ist ein aus Isolierstoff bestehender, im Querschnitt rechteckiger Kasten 18 eingegossen, der nach außen hin durch einen in der Außenwand 20 des Betongehäuses 10 bündig liegenden Deckel 22 abgeschlossen ist. Wie aus Fig.3 deutlich zu sehen ist, ist der Rand 24 in einen allseitig umlaufenden Deckelfalz 26 mit L-förmigem Profil eingefügt, in den ein ebenfalls umlaufender Dichtungsstreifen 28 eingelegt ist. In das Betongehäuse 10 ist im Bereich des Deckelfalzes 26 eine Anzahl von Metalldübeln 30 eingegossen, an welchen der Deckel über Schraublöcher 31 mittels nicht gezeigter Schrauben lösbar befestigt werden kann. Durch diese Anordnung ist eine weitgehende Abdichtung des Isolierkastens 18 nach außen ohne Vergießen mit Gießharz erreicht.

Lediglich im Bereich der an der Unterseite des Isolierkastens 18 angeordneten, allgemein mit 32 bezeichneten Erdkabeleinführung muß eine besondere Maßnahme zur Abdichtung derselben vorgenommen werden. Jede Erdkabeleinführung 32 weist eine an die Unterseite 34 des Isolierstoffkastens 18 dicht angeschlossene, in das Betongehäuse 10 eingegossene Hülse 36 auf, mit deren unterem Ende eine aus dem Betongehäuse 20 nach unten vorstehende Schraubhülse 38 verschraubt ist. Unter Einfügung einer Ringdichtung 40 ist ein Erdkabel 42 durch Verschraubhülse 38 und Hülse 36 ins Innere des Isolierstoffkastens 18 eingeführt. Die Verschraubhülse 38 sowie ein außerhalb der Verschraubhülse 38 liegender Abschnitt des Erdkabels 42 sind überdies von einem abdichtenden Schrumpfschlauch 44 dicht umschlossen. Somit ist auch hier ohne Vergießen mit Gießharz eine vollständige Abdichtung erreicht.

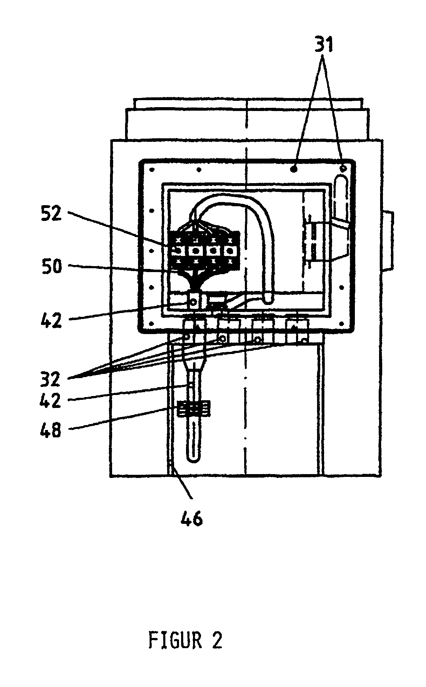

Bei der dargestellten Ausführungsform sind gemäß Fig.2 insgesamt vier Erdkabeleinführungen 32 vorgesehen. Die nicht mit einem Erdkabel 42 belegten Erdkabeleinführungen 32 sind in nicht näher dargestellter Weise durch Deckel, Membranen oder dergl. wasserdicht verschlossen.

Unterhalb des Isolierstoffkastens 18 ist eine nach innen springende Nische 46 des Betongehäuses 10 vorgesehen, durch welche die Erdkabel 42 an die Kabeleinführungen 32 herangeführt und durch je eine Bügelschelle 48 festgelegt werden können. Dadurch ist eine hervorragende Zugentlastung der Erdkabel 42 erreicht.

Wie aus den Figuren 2 und 4 ersichtlich, sind die Einzellitzen 50 des Erdkabels 42 einzeln mit Klemmen 52 verschraubt, die im Innern des vom Isolierstoffkasten 18 gebildeten Klemmraums angebracht sind. Ebenfalls mit diesen Klemmen 52 sind die Einzellitzen 54 eines kleineren Querschnitt besitzenden, elastischen Anschlußkabels 56 verschraubt, das aus dem Isolierstoffkasten 18 herausgeführt ist. An die Innenwand 58 des Isolierstoffkastens 18 ist ein Vorsicherungskasten 60 angehängt, durch welchen das Anschlußkabel 56 nach oben geführt wird. In den Boden des Vorsicherungskastens 60 wird das Anschlußkabel 56 mittels einer Kabelverschraubung 62 eingeführt. Solche Kabelverschraubungen können für jedes weitere erforderliche Anschlußkabel vorgesehen sein. Durch eine Öffnung in der Decke des Vorsicherungskastens 60 wird eine elastische Schleife 64 des Anschlußkabels 56 ins Innere des Betongehäuses 10 geführt und kann in an sich bekannter, nicht näher dargestellter Weise an den im Betongehäuses 10 angeordneten Senkelektranten angeschlossen werden. Als Zugentlastung der aus dem Vorsicherungskasten 60 herausgeführten elastischen Schleife 64 ist eine zweite Bügelschelle 66 vorgesehen, mittels der die elastische Schleife 64 an dem Betongehäuse 10 befestigt ist.

Durch Öffnungen und nicht vorhandene Abdichtungen an der Innenseite des Isolierstoffkastens 18 und des Vorsicherungskastens 60 sind diese mit dem Inneren des Betongehäuses 10 klimatisch verbunden, so daß kein Schwitzwasser entstehen kann. Der gesamte, in das Betongehäuse 10 eingesetzte Kabelanschlußkasten besteht somit aus dem Isolierstoffkasten 18 mit Deckel 22 sowie dem Vorsicherungskasten 60 mit Anschlußteilen.

Der Deckel 22 ist bündig in die Außenfläche 20 des Betongehäuses 10 eingefügt, was sowohl für die Abdichtung als auch für die Erzielung eines guten Schutzes gegen Erddruck oder Oberflächendruck vorteilhaft ist.

## Patentansprüche

1. Senkelektrant, umfassend ein Betongehäuse (10), in dessen Wandung (16) ein mit zum Anschließen mindestens eines Erdkabels (42) sowie mindestens eines flexiblen, im Inneren des Senkelektranten hängenden Anschlusskabels (56) geeigneten Anschlussklemmen (52) versehenen Kabelanschlusskasten angeordnet ist,
**dadurch gekennzeichnet, dass**
der Kabelanschlusskasten einen zum Inneren des Betongehäuses (10) offenen Kasten (18) aus Isolierstoff aufweist, der in die Wandung (16) des Betongehäuses (10) des Senkelektranten eingegossen und nach außen durch einen abnehmbaren Deckel (22) sowie mindestens eine zum Einführen des Erdkabels geeignete Einführung (32) wasserdicht abgeschlossen ist.

2. Senkelektrant nach Anspruch 1, **dadurch gekennzeichnet, dass** das Betongehäuse (10) eine äußere Nische (46) zur Heranführung des bzw. der Erdkabel(s) (42) an die Erdkabeleinführung (32) aufweist und dass in der Nische eine oder mehrere Bügelschelle(n) (48) zur Halterung des bzw. der Erdkabel(s) (42) vorgesehen ist bzw. sind.

3. Senkelektrant nach Anspruch 1 oder 2, **dadurch gekennzeichnet, dass** die Erdkabeleinführung (32) für jedes Erdkabel (42) eine an den Isolierstoffkasten (18) dicht angeschlossene, in das Betongehäuse (10) eingegossene und gegen das Erdkabel (42) abgedichtete Hülse (36) und eine damit verschraubte, aus dem Betongehäuse (10) in die Nische (46) desselben ragende Verschraubhülse (38) aufweist.

4. Senkelektrant nach Anspruch 3, **dadurch gekennzeichnet, dass** in der Nische (46) ein Schrumpfschlauch (44) vorgesehen ist, welcher Verschraubhülse (38) und Erdkabel (42) bis zur Verschraubung mit der Hülse (36) umfasst und teilweise am Erdkabel (42) und teilweise an der Verschraubhülse (38) dichtend anliegt.

5. Senkelektrant nach einem der vorangehenden Ansprüche, **dadurch gekennzeichnet, dass** in einem am Isolierstoffkasten (18) befestigten Vorsicherungskasten (60) eine Kabelverschraubung (62) zur Durchführung jedes flexiblen Anschlusskabels (56) vorgesehen ist, wobei das Anschlusskabel (56) aus dem Vorsicherungskasten freihängend ins Innere des Betongehäuses geführt ist.

6. Senkelektrant nach einem der vorangehenden Ansprüche, **dadurch gekennzeichnet, dass** der Isolierstoffkasten (18) einen umlaufenden Deckelfalz (26) mit L-förmigem Profil und eingelegten Dichtungsstreifen (28) aufweist und dass der Rand (24) des Deckels (22) im Deckelfalz (26) durch Schrauben festlegbar ist, die in im Betongehäuse sitzende Dübel (30) einschraubbar sind.

7. Senkelektrant nach Anspruch 6, **dadurch gekennzeichnet, dass** der Deckel (22) mit einer seitlichen Außenwand (20) des Betongehäuses (10) bündig liegt.

## Claims

1. A retractable supply post, comprising a concrete housing (10), in the walls (16) of which a cable connection box is disposed, which is provided with terminals (52) that are suitable for the connection of at least one underground cable (42) and also of at least one flexible connecting cable (56) suspended in the interior of the retractable supply post,
**characterised in that** the cable connection box comprises a case (18) made from insulating material which is open to the interior of the concrete housing (10), and which is cast into the walls (16) of the concrete housing (10) of the retractable supply post and is sealed in watertight manner from the outside by a removable cover (22) and also at least one inlet (32) suitable for the introduction of the underground cable.

2. A retractable supply post according to Claim 1,
**characterised in that** the concrete housing (10) comprises an external recess (46) for the feeding of the underground cable(s) (42) to the underground cable inlet (32)
**and in that** one or more cable clamp(s) (48) is/are provided in the recess to hold the underground cable(s) (42).

3. A retractable supply post according to Claim 1 or 2,
**characterised in that** the underground cable inlet (32) for each underground cable (42) comprises a sleeve (36), which is tightly connected to the insulating material case (18), is cast into the concrete housing (10) and is sealed from the underground cable (42), and a screw-down sleeve (38) which is screwed therewith and protrudes from the concrete housing (10) into the recess (46) of said housing.

4. A retractable supply post according to Claim 3,
**characterised in that** a shrink-down plastic tube (44), which contains screw-down sleeve (38) and underground cable (42) up until screwing with the sleeve (36) and partially abuts the underground cable (42) and partially abuts the screw-down sleeve (38), is provided in the recess (46).

5. A retractable supply post according to one of the preceding Claims,
**characterised in that** a cable gland (62) for the passage of each flexible connecting cable (56) is provided in a prefusing case (60) fixed to the insulating material case (18), where the connecting cable (56) is passed out of the prefusing case suspended into the interior of the concrete housing.

6. A retractable supply post according to one of the preceding Claims,
**characterised in that** the insulating material case (18) comprises a circumferential cover groove (26) having an L-shaped profile and an inserted sealing strip (28),
**and in that** the edge (24) of the cover (22) can be fixed in the cover groove (26) by screws which can be screwed into dowels (30) seated in the concrete housing.

7. A retractable supply post according to Claim 6,
**characterised in that** the cover (22) lies flush with a lateral outer wall (20) of the concrete housing (10).

## Revendications

1. Coffre de raccordement électrique enterré, comprenant un caisson en béton (10) dans la paroi (16) duquel est disposée une boite de raccordement de câbles munie de bornes de raccordement (52) appropriée pour raccorder au moins un câble souterrain (42) ainsi qu'au moins un câble de raccordement flexible (56) qui pend à l'intérieur du coffre de raccordement électrique enterré,
**caractérisé en ce que**
la boite de raccordement de câbles présente une boite (18) en matière isolante ouverte sur l'intérieur du caisson en béton (10) qui est noyé dans la paroi (16) du caisson en béton (10) du coffre de raccordement électrique enterré et est fermée vers l'extérieur à joint étanche à l'eau par un couvercle amovible (22) et par au moins une entrée (32) appropriée pour l'entrée du câble souterrain.

2. Coffre de raccordement électrique enterré selon la revendication 1,
**caractérisé en ce que**
le caisson en béton (10) présente une niche extérieure (46) servant à amener le ou les câbles souterrains (42) à l'entrée de câble souterrain (32), et dans la niche, est ou sont prévus un ou plusieurs colliers en étrier (48) destinés à tenir le ou les câbles souterrains (42).

3. Coffre de raccordement électrique enterré selon la revendication 1 ou 2
**caractérisé en ce que**
l'entrée de câble souterrain (32) prévue pour chaque câble souterrain (42) présente une douille (36) raccordée à joint étanche à la boîte en matière isolante (18), noyée dans le caisson en béton (10) et montée à joint étanche sur le câble souterrain (42) et une douille filetée (38), qui est vissée sur cette douille et qui émerge du caisson en béton (10) en s'engageant dans la niche (46).

4. Coffre de raccordement électrique enterré selon la revendication 3,
**caractérisé en ce que**
dans la niche (46), est prévu un tube rétractable (44) qui recouvre la douille filetée (38) et le câble souterrain (42) jusqu'à la partie vissée avec la douille (36) et qui s'appuie à joint étanche en partie sur le câble souterrain (42) et en partie sur la douille filetée (38).

5. Coffre de raccordement électrique enterré selon une des revendications précédentes,
**caractérisé en ce que**
dans une boite de sécurité amont (60) fixée à la boîte en matière isolante (18), est prévu un passage de câble à vis (62) servant à enfiler chaque câble de raccordement flexible (56), le câble de raccordement (56) étant passé de la boite de sécurité amont à l'intérieur du caisson en béton en pendant librement.

6. Coffre de raccordement électrique enterré selon une des revendications précédentes,
**caractérisé en ce que**
la boîte en matière isolante (18) présente une feuillure de couvercle périphérique (26) à profil en L et une bande d'étanchéité (28) interposée, et
le bord (24) du couvercle (22) peut être fixé dans la feuillure (26) du couvercle par des vis qui peuvent être vissées dans des chevilles (30) logées dans le caisson en béton.

7. Coffre de raccordement électrique enterré selon la revendication 6,
**caractérisé en ce que**
le couvercle (22) est à l'affleurement d'une paroi latérale extérieure (20) du caisson en béton (10).
